# FASCICULE DE BREVET EUROPEEN

(11) **EP 2 896 584 B1**
(45) Date de publication et mention de la délivrance du brevet: **20.12.2017**
(21) Numéro de dépôt: 14191228.7
(22) Date de dépôt: 06.10.2009
(51) Int. Cl.: B65G 47/84, G01N 21/90, B65G 33/32

(54) **Installation de contrôle de la qualité d'une succession d'articles, en particulier des bouteilles**
Qualitätskontrollanlage einer Reihe von Artikeln, insbesondere von Flaschen
Facility for monitoring the quality of a series of items, in particular of bottles

(30) Priorité: 06.10.2008 FR 0856767
(43) Date de publication de la demande: 22.07.2015
(62) Demande divisionnaire de: 09755967.8
(73) Titulaire: Ermi 77, 77370 Nangis (FR)
(72) Inventeur: Cloarec, Didier, 77870 VULAINES SUR SEINE (FR); Rocchetti, Xavier, 77120 Mauperthuis (FR); Weber, Stephan, 77000 MELUN (FR)
(74) Mandataire: Pontet Allano & Associes

(56) Documents cités:
- EP-A2- 0 809 099
- DE-U1- 9 101 934
- FR-A- 2 900 238
- JP-A- 2004 233 129
- US-A- 4 275 808

## Description

La présente invention concerne une installation de contrôle de la qualité d'une succession d'articles, en particulier des bouteilles en verre.

Une telle installation de contrôle permet d'effectuer de façon automatisée plusieurs contrôles sur un même type d'article, en particulier une bouteille en verre. Les articles sont introduits un à un dans l'installation de contrôle, passent par différents postes de contrôle, puis sortent de l'installation.

On contrôle par exemple le diamètre du goulot, la planéité du bord libre de l'article, l'absence de fissurations, etc.

On connaît déjà dans l'art antérieur une telle installation de contrôle, comprenant généralement un carrousel. Le rotor du carrousel comprend une succession de logements, dans lesquels les articles sont positionnés, puis entraînés en rotation pour passer par une succession de postes de contrôle.
Cette installation est utilisée dans le cadre d'une production en série, et configurée de façon à être adaptée à une même série d'articles aux caractéristiques identiques. Lorsque l'on change la série à contrôler, il est nécessaire d'effectuer de nombreux réglages sur l'installation afin de l'adapter à de nouvelles caractéristiques d'article, en particulier de nouvelles dimensions. Ces réglages induisent un temps d'immobilisation de l'installation relativement long, qui se traduit par des pertes financières.

Le document FR 2 900 238 décrit une installation de contrôle selon le préambule de la revendication 1, ainsi que deux modules comprenant chacun au moins des moyens de contrôle d'un article, des moyens de réglage d'au moins un paramètre de contrôle de l'article, et des moyens d'entraînement. Ces deux modules permettent d'effectuer les réglages pour un premier module sur une installation de réglage annexe pendant que le deuxième module est en fonctionnement dans l'installation. Il suffit ensuite lors du changement de la série d'articles à contrôler, et pour que l'installation soit adaptée à la nouvelle série d'articles, d'intervertir le module fixé au bâti fixe de l'installation avec le module pré-réglé sur l'installation de réglage.
Cet art antérieur permet de limiter le temps d'immobilisation de l'installation, mais induit un encombrement total pratiquement multiplié par deux.

Le but de l'invention est de perfectionner les installations connues, et en particulier de limiter le temps d'immobilisation de l'installation, tout en limitant l'encombrement et le coût de l'ensemble du matériel mis en oeuvre par l'invention. L'idée qui est à la base de l'invention est de mettre en place des dispositifs de montage, démontage, et/ou réglage rapide, pour une partie au moins des éléments de l'installation qui nécessitent un nouveau réglage entre deux séries d'articles. Suivant l'invention, l'installation de contrôle de la qualité d'une succession d'articles est caractérisée par les caractéristiques de la revendication 1. L'invention permet de réaliser une économie de temps lors des changements de séries. En outre, la qualité des réglages et des positionnements est améliorée.

Dans la suite, on appellera poste de contrôle l'emplacement où s'effectue un contrôle, et module de contrôle un module situé à un poste de contrôle permettant d'effectuer ledit contrôle. Les postes de contrôle comprennent typiquement au moins l'un des postes suivants :
- un poste de contrôle de la planéité du bord libre du goulot de l'article, en particulier de la bouteille,
- un poste de contrôle d'au moins un des diamètres intérieur et extérieur du goulot, dit poste de calibrage.

La roue du carrousel comprend sur son périmètre extérieur une succession de logements dans lesquels les articles, en particulier les bouteilles, viennent se loger. Les dimensions de ces logements sont telles qu'un seul article à la fois se place à l'intérieur d'un logement. Les logements sont ouverts sur l'extérieur. Lorsque le rotor du carrousel est en rotation, les articles s'approchent successivement de la roue du carrousel et entrent un à un dans les logements successifs.

Dans un mode de réalisation privilégié, la roue du carrousel comporte douze logements au moins, dont par exemple quatre peuvent permettre d'effectuer chacun un contrôle. Le rayon de la roue du carrousel, défini comme étant la distance entre le centre de la roue du carrousel et le centre d'un article à contrôler situé dans un logement de la roue, est de préférence sensiblement égal à 380mm dans un mode de réalisation privilégié de l'invention. On peut alors contrôler des articles de diamètre allant de 20 mm jusqu'à 180mm. Ce grand rayon de la roue du carrousel, relativement élevé, permet d'avoir recours à des cadences plus élevées, notamment en raison de la courbure moins importante du trajet effectué par les articles entraînés par le carrousel.

Selon un mode de réalisation particulier de l'invention, la roue du carrousel peut être formée de deux couples de demi disques, chaque couple comprenant deux demi disques, l'un au dessus de l'autre et qui sont maintenus espacés entre eux par des pièces. De préférence, ces deux couples de demi disques constituent deux disques superposés, de façon à tenir chaque article en deux endroits. L'espace entre ces deux disques doit être réglé en fonction de la hauteur de la série d'article à contrôler. Dans un mode de réalisation de l'invention, le réglage de l'espace entre ces deux disques s'effectue préalablement au montage desdits disques sur le carrousel. Pour cela, les deux disques sont séparés en deux couples de demi disques. Chaque demi disque est relié au demi disque prévu pour être situé en dessous par des pièces qui définissent l'espace entre les deux disques superposées ou décalés. Ensuite, on monte les deux couples de demi disques sur le carrousel. On gagne ainsi du temps de réglage des articles, puisque le réglage de l'espace entre les deux disques du carrousel peut être effectué en avance, tandis que l'installation est en fonctionnement avec une autre roue.

Une vis d'introduction permet de loger, les uns après les autres, les articles à contrôler dans les logements successifs de la roue du carrousel. Le pas de la vis est choisi de façon à être adapté au diamètre des articles à contrôler, c'est-à-dire que le pas de la vis est légèrement supérieur au diamètre des articles à contrôler.

Les articles sont amenés au niveau de la vis par un tapis roulant. L'extrémité aval de la vis se trouve à proximité du périmètre extérieur de la roue du carrousel. Le tapis roulant passe à côté de l'axe de rotation du carrousel. La vis est placée dans une direction intermédiaire entre la direction de translation du tapis roulant, et la direction du rayon de la roue du carrousel passant par l'extrémité aval de la vis.

La vis est dans un mouvement de rotation continue, tandis que le carrousel alterne entre des périodes durant lesquelles il est immobile et des période durant lesquelles il effectue une rotation d'un arc de cercle correspondant à un décalage d'un logement. Ces deux mouvements sont synchronisés de telle sorte que la roue du carrousel présente au niveau de l'entrée des articles un logement vide, au moment où la vis finit d'amener un article au niveau de cette entrée.

Selon un mode privilégié de l'invention, un dispositif de montage et démontage rapide permet par exemple de changer rapidement la vis pour remplacer une première vis par une seconde vis interchangeable, correspondant à un diamètre différent des articles. Ce dispositif de montage et démontage rapide représente ainsi aussi un dispositif de réglage rapide, puisqu'un changement de la vis d'entrée permet de régler le système d'introduction des articles en fonction du diamètre de ces derniers. Ce dispositif de réglage rapide permet un gain de temps considérable entre deux utilisations de l'installation avec des articles de diamètres différents.

Dans un mode de réalisation privilégié, le dispositif de montage et/ou de réglage rapide comprend un système à baïonnette qui permet de fixer la vis sur un arbre d'entraînement. Le système à baïonnette assure en particulier le calage angulaire de la vis sur l'arbre d'entraînement, de façon que la rotation de l'arbre commande précisément la rotation de la vis. Pour un meilleur contrôle de l'angle de rotation de l'arbre, l'arbre d'entraînement est entraîné par un servomoteur. Ce contrôle précis de la rotation permet en particulier d'effectuer la synchronisation entre la rotation de la vis et la rotation de la roue du carrousel, qui est également assurée par un servomoteur, les deux servomoteurs étant pilotés à partir de la même unité de commande.

Lors de leur trajet entraîné par la rotation de la roue du carrousel, d'un poste de contrôle au suivant, les articles sont maintenus en place dans leurs logements respectifs du carrousel par des guides situés radialement à l'extérieur de la roue du carrousel. Dans un mode de réalisation de l'invention, des moyens pour régler les guides entre différentes positions correspondant à différents diamètres de l'article constituent un dispositif de réglage rapide. Le réglage de la position des guides permet non seulement d'adapter leur position au maintien d'articles de différents diamètres, mais aussi permet si besoin de retirer un article de son logement, rapidement et sans outillage spécifique.

Ces moyens pour régler les guides comprennent de préférence une molette de réglage que l'on peut faire tourner à la main entre différentes positions prédéterminées, de préférence définies par des crans. On peut aussi régler la position de la molette par lecture de graduations. L'un des guides a de préférence une forme générale de dièdre, avec une face guidant l'article le long de la vis d'entraînement, et une autre face guidant l'article au début de son trajet dans les logements successifs. Ce guide en dièdre est avantageusement réglable selon une direction oblique par rapport à chacune des deux faces précitées, pour assurer un réglage simultané et concordant de l'espace laissé aux articles le long de la vis et dans les logements, en fonction du diamètre des articles.

Les différents guides sont préférablement portés par au moins un support, mobile selon l'invention entre une position d'ouverture dans laquelle les guides libèrent les articles relativement aux logements, et une position de fermeture définie par des moyens de verrouillage rapide et dans laquelle les articles sont maintenus dans leurs logements. Les moyens pour régler les guides entre différentes positions agissent entre les guides et l'au moins un support. Ledit support comprend de préférence deux battants articulés s'ouvrant et se fermant à la manière d'un portail, dont des extrémités opposées sont fixes tandis que des extrémités mobiles sont adjacentes l'une à l'autre en position de fermeture et s'écartent l'une de l'autre vers l'extérieur de l'installation lors du passage en position d'ouverture. L'ouverture du support ainsi facilitée permet un gain de temps considérable et ne requiert pas l'utilisation d'outillage spécifique, en particulier lorsque l'un des articles nécessite d'être retiré du carrousel, par exemple parce qu'il s'est brisé.

Dans un mode de réalisation privilégié, les moyens de verrouillage rapide sont actionnés par un utilisateur à la main. Ils permettent à la fois de guider les battants du support dans leur position de fermeture, puis de verrouiller ensemble les deux battants. Le verrouillage obtenu est alors rigide et précis. Les moyens de verrouillage rapide comprennent une pièce munie d'un creux en forme de V et une tige terminée par un ergot, situés sur un premier battant, et s'encastrant lors de la fermeture du support respectivement dans une pièce de forme complémentaire et une pièce en forme d'arc de cercle, la pièce en forme d'arc de cercle comprenant une face qui est en contact avec l'ergot après fermeture du support, et qui est de forme hélicoïdale.

Dans le trajet des article entre les sites d'entrée et de sortie des articles sur le carrousel, se trouve au moins un poste de contrôle. La roue du carrousel liée au rotor de ce dernier fait passer les articles successivement par les postes de contrôle qui sont quant à eux solidaires du stator du carrousel, et donc du bâti de l'installation. L'installation peut comprendre en particulier un dispositif de montage, démontage et réglage rapide d'un module de contrôle situé à l'un des postes de contrôle. Ce dispositif permet de détacher rapidement le module de contrôle du carrousel, de façon à effectuer les réglages et configurations du module à l'extérieur du carrousel, sur un banc de préréglage. Ainsi, on gagne du temps entre deux utilisations de l'installation avec des articles aux caractéristiques différentes. Alors qu'un premier module de contrôle est utilisé pour un premier type d'articles sur le carrousel, on prépare en parallèle sur le banc de réglage un second module de contrôle adapté à un second type d'articles qui sera contrôlé par la suite. Au moment de changer le type d'article contrôlé sur l'installation, un module de contrôle possédant les nouveaux réglages est déjà prêt. Il suffit de changer le module de contrôle sur l'installation, ce qui se fait rapidement grâce au dispositif de montage et démontage rapide.

Le dispositif de montage et démontage rapide comprend dans un mode privilégié de réalisation un système de glissière et de verrouillage amovible par lequel le module de contrôle s'enclenche sur un appui lié au bâti de l'installation de contrôle, ainsi qu'une poignée permettant sa préhension à la main pour le montage et le démontage sur le bâti de l'installation de contrôle.

Le poste de contrôle doté de ce dispositif de montage, démontage et réglage rapide est avantageusement celui de la détection des fissurations dans un article. En effet, il s'agit d'un contrôle qui nécessite de longs réglages. La technique couramment utilisée pour détecter des fissurations dans un article est d'utiliser plusieurs paires émetteur/récepteur de lumière, et de détecter la lumière déviée par des défauts typiques tels qu'une fissure périphérique au col d'une bouteille, une fissure axiale au sommet d'une bouteille, etc. Le réglage consiste donc à envoyer un faisceau lumineux en direction de l'endroit où peut se trouver le défaut, et à régler la position du récepteur correspondant de façon à ce qu'il reçoive la lumière déviée par le défaut. On utilise pour le réglage un ou plusieurs articles échantillons présentant les défauts pour lesquels on souhaite effectuer le réglage. On utilise pour les différents défauts plusieurs paires émetteur/récepteur qui ont des fréquences lumineuses différentes, pour éviter que les paires associées aux différents types de défauts ne se perturbent entre elles.

De préférence, le poste de contrôle de la planéité comprend un embout tubulaire mobile dont une extrémité de préférence plane vient s'appliquer sur le bord libre du goulot. L'embout est raccordé à une source de vide et à un capteur de pression. Le contrôle de la planéité du bord libre s'effectue en faisant diminuer la pression à l'intérieur de l'article, et en mesurant la pression dans l'article, de façon à comparer les mesures de pression expérimentales à des mesures de pression théoriques, et ainsi déterminer l'état de fermeture de l'article lorsque l'extrémité de préférence plane de l'embout est appliquée sur le bord libre du goulot. Si le bord libre n'est pas plan, on détecte une pression plus élevée due à l'absence d'étanchéité entre l'embout et le bord libre. La mesure par diminution de la pression, et non par augmentation de la pression, s'est avérée plus précise et plus rapide.

Alternativement ou en complément, le poste de contrôle de diamètre, dit poste de calibrage des articles peut comprendre :
- des moyens mobiles portés par un corps et qui viennent en prise avec le goulot de l'article, en particulier de la bouteille,
- des moyens d'autopositionnement assurant entre le corps du module de contrôle et le bâti de l'installation au moins deux degré de liberté permettant au corps de s'autopositionner relativement à l'article lorsque les moyens mobiles viennent en prise avec le goulot.

Les moyens qui viennent en prise avec le goulot comprennent typiquement un piston, de forme tronconique avec le plus petit diamètre de cône orienté vers les articles à contrôler, ce qui facilite son engagement partiel au moins à l'intérieur des articles. Le côté de plus grand diamètre du piston tronconique se prolonge par une partie cylindrique de diamètre sensiblement égal au grand diamètre de la partie tronconique. Si le diamètre intérieur du goulot est insuffisant, la partie cylindrique du piston ne pénètre pas dans le goulot de la bouteille. On détecte la course du piston pour savoir si cela se produit. On contrôle ainsi le diamètre intérieur du goulot des articles.

Les moyens qui viennent en prise avec le goulot comprennent également, de préférence, une cloche qui, si le diamètre extérieur du goulot ne dépasse pas une cote maximale admissible, vient coiffer le goulot après que les moyens qui viennent en prise sont venus en interengagement avec le goulot. Ladite cloche permet ainsi de contrôler le diamètre extérieur du goulot. On détecte la course de la cloche. Une course insuffisante indique que le diamètre extérieur du goulot est excessif.

Selon un mode de réalisation de l'invention, les moyens d'autopositionnement comprennent un système dit de compliance, c'est-à-dire un système apte à s'adapter à son environnement extérieur, en l'occurrence à la position du goulot des articles à contrôler.

Lesdits moyens d'autopositionnement comprennent par exemple un axe de pivotement longitudinal sensiblement parallèle à l'axe de l'article, en particulier de la bouteille. Cet axe de pivotement confère au corps qui s'autopositionne par rapport à l'article, et qui porte la cloche ainsi que le piston tronconique, l'un des degrés de liberté lui permettant de s'autopositionner relativement à l'article lorsque les moyens mobiles viennent en prise avec le goulot. L'axe de pivotement est sensiblement situé entre l'axe de la bouteille et l'axe du carrousel, et dans le même plan que ceux-ci. Autrement dit, l'axe de pivotement coupe le rayon de la roue passant par le logement se trouvant au poste de contrôle en question.

Les moyens d'autopositionnement comprennent aussi un guidage en translation transversale, perpendiculaire à l'axe de pivotement longitudinal, et sensiblement radial relativement au carrousel. L'axe de pivotement longitudinal et le guidage en translation permettent conjointement à l'axe de prendre n'importe quelle position parallèle à l'axe du carrousel dans une zone déterminée, et donc de venir coïncider avec l'axe de l'article lorsque les moyens mobiles viennent en prise avec le goulot.

Le poste de calibrage comprend dans un mode de réalisation privilégié des moyens élastiques pour rappeler le corps dans une position de repos autour de l'axe de pivotement longitudinal et le long du guidage en translation lorsque les moyens qui viennent en prise sont libres. La position de repos des moyens d'autopositionnement est sensiblement centrale, pour que partant de cette position, et grâce aux moyens d'autopositionnement, les moyens qui viennent en prise puissent atteindre les goulots des articles successifs à contrôler, quelle que soit leur position exacte lorsqu'un logement s'arrête au poste de contrôle en question.

Le trajet d'évacuation d'un article hors de son logement du carrousel s'effectue vers l'arrière, sur un tapis de sortie, suivant un axe de sortie du carrousel qui prolonge sensiblement un rayon de la roue du carrousel. Chaque article quitte son logement du carrousel sensiblement lorsque son logement passe par le rayon précité. La sortie des articles s'effectue donc « dans l'axe du carrousel », autrement dit suivant une trajectoire portée par une ligne droite qui coupe l'axe de rotation de la roue du carrousel. La sortie des articles est ainsi naturelle, et particulièrement stable, bien que leur sortie hors d'un logement du carrousel entraînés par un tapis roulant tendrait au contraire à les déséquilibrer. La vitesse du tapis de sortie est décorrélée de celle du tapis d'entrée. On peut ainsi avoir une vitesse d'introduction des articles sur le carrousel différente de la vitesse à laquelle lesdits articles quittent le carrousel. La combinaison de la sortie naturelle des articles, dans l'axe du carrousel, et du contrôle indépendant du tapis de sortie, permet d'augmenter la vitesse de sortie des articles, ces derniers étant plus stables lors de leur sortie du carrousel grâce à la sortie dans l'axe. La vitesse du tapis de sortie est réglable pour optimiser l'accélération impartie aux articles lorsqu'ils atteignent le poste de sortie. Cette accélération résulte de la friction entre le fond de l'article qui arrive en direction circonférentielle, et le tapis qui circule en direction radiale.

Après la sortie du carrousel, un système de guidages et d'aiguillages permet d'isoler les articles qui se sont avérés défectueux suite à l'un des contrôles effectués, les articles qui ne présentent pas de défaut d'après les contrôles effectués, et les articles échantillons qui ne servent que pour un ou plusieurs réglages sur le carrousel et les postes de contrôle.

D'autres particularités et avantages de l'invention apparaîtront à la lecture de la description détaillée d'un exemple de mise en oeuvre nullement limitatif, et des dessins annexés :
- la figure 1 représente une vue d'ensemble en perspective de l'installation selon l'invention dans l'exemple du contrôle de bouteilles;
- la figure 2 est une vue de dessus de la partie inférieure de l'installation;
- la figure 3 est une vue en perspective de l'arbre d'entraînement de la vis ;
- la figure 4 est une vue en coupe axiale du système à baïonnette ;
- la figure 5 représente en perspective le dispositif de réglage de la position d'un guide ;
- la figure 6 est une vue analogue à la figure 5, mais partielle et en coupe le long de la crémaillère de réglage ;
- la figure 7 représente en perspective le module de contrôle des fissurations ;
- la figure 8 représente en perspective partielle le module de contrôle des fissuration au moment d'être engagé sur l'installation ;
- la figure 9 représente en perspective le module de contrôle des fissurations engagé sur l'installation et coopérant avec une bouteille ;
- la figure 10 représente en coupe le dispositif de montage, démontage et réglage rapide d'un module de contrôle ;
- la figure 11 représente en perspective le poste de contrôle de la planéité du bord libre de l'article ;
- la figure 12 représente en perspective le poste de calibrage des articles ;
- La figure 13 représente en perspective les moyens de verrouillage rapide du support qui porte les guides ;
- La figure 14 représente en perspective le support qui porte les guides, en position d'ouverture ;
- La figure 15 représente en perspective la roue du carrousel.

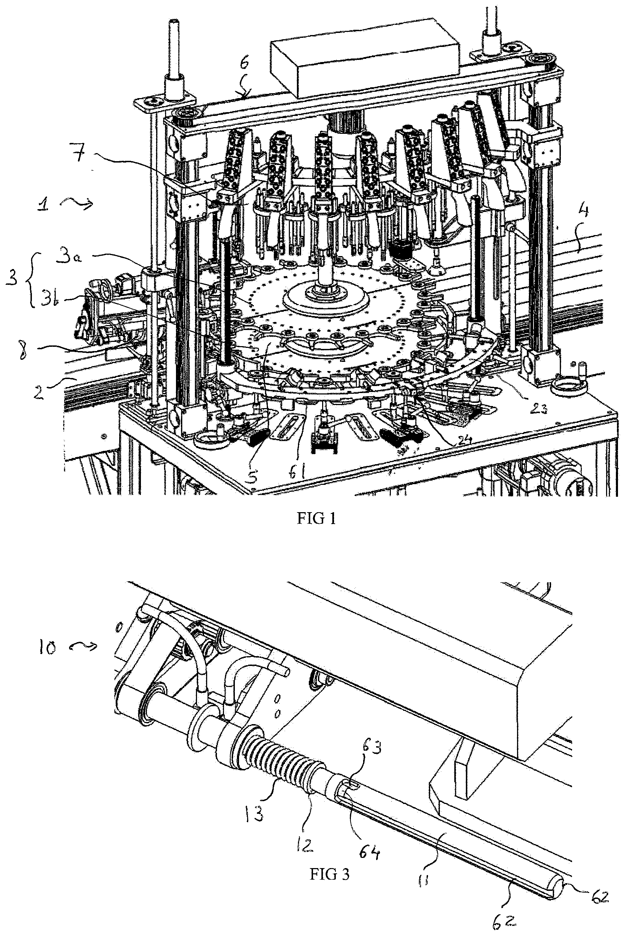

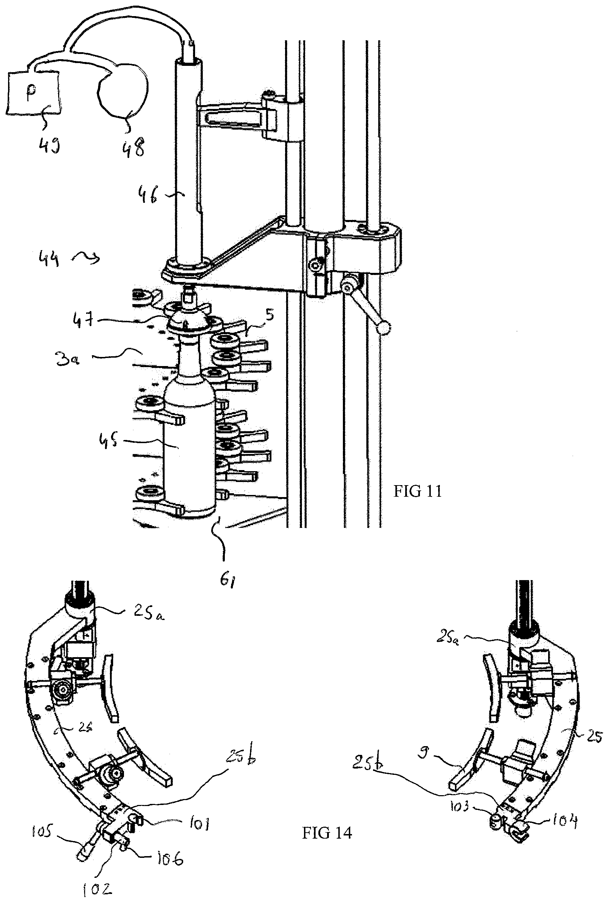

Comme le montre la figure 1, l'installation 1 comprend un bâti 6, un carrousel ayant une roue 3 supportée en rotation suivant un axe vertical dans le bâti 6, un tapis roulant 2 d'acheminement des articles au carrousel, et un tapis roulant de sortie 4 par lequel les articles quittent le carrousel. Le tapis roulant 2 passe à une certaine distance de l'axe de la roue 3 du carrousel. L'axe longitudinal du tapis de sortie 4 est sensiblement radial relativement à l'axe du carrousel. Le plan de support commun défini par les tapis roulants 2 et 4 est complété de façon quasiment jointive par un plancher fixe 61 (mieux aperçu à la figure 11) situé sous la roue 3 et sur lequel glisse le fond des articles lorsqu'ils sont entraînées par la roue 3.

La roue 3 du carrousel comprend sur son périmètre extérieur une succession de logements 5 ouverts radialement vers l'extérieur. Chaque logement 5 est destiné à recevoir un article (non représenté à la figure 1), et entraîne ainsi les articles depuis le tapis roulant 2 d'acheminement jusqu'au tapis roulant de sortie 4, en passant par une succession de postes de contrôle 7. La rotation de la roue 3 se fait par pas successifs, de façon que les articles restent immobiles au niveau d'un poste de contrôle 7 pendant une opération de contrôle, puis sont amenés au poste de contrôle 7 suivant. Dans l'exemple représenté, la roue 3 est constituée de deux disques superposés 3a et 3b qui tournent ensemble et définissent conjointement les logements 5, de façon que chaque article soit tenu et sollicité en déplacement en deux positions différentes de sa hauteur.

Dans un mode de réalisation privilégié, la roue du carrousel comporte douze logements au moins, dont par exemple quatre peuvent permettre d'effectuer chacun un contrôle. Le rayon de la roue du carrousel, défini étant la distance entre le centre de la roue du carrousel et le centre d'un article à contrôler situé dans un logement 5 de la roue, est de préférence sensiblement égal à 380mm dans un mode de réalisation privilégié de l'invention. On peut alors contrôler des articles de diamètre allant de 20 mm jusqu'à 180mm. Ce grand rayon de la roue du carrousel, relativement élevé, permet d'avoir recours à des cadences plus élevées, notamment en raison de la courbure moins importante du trajet effectué par les articles entraînés par le carrousel.

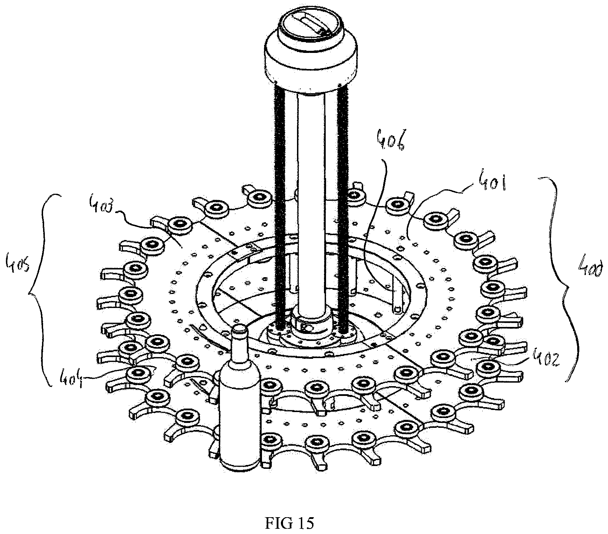

Selon un mode de réalisation particulier de l'invention représenté figure 15, la roue du carrousel peut être formée de deux couples de demi disques 400 et 405, chaque couple comprenant deux demi disques respectivement 401 ,402 et 403, 404, l'un au dessus de l'autre et qui sont maintenus espacés entre eux par des pièces 406. De préférence, ces deux couples 400 et 405 de demi disques constituent deux disques superposés (3a et 3b sur la figure 1), de façon à tenir chaque article en deux endroits. L'espace entre ces deux disques doit être réglé en fonction de la hauteur de la série d'article à contrôler. Dans un mode de réalisation de l'invention, le réglage de l'espace entre ces deux disques s'effectue préalablement au montage desdits disques sur le carrousel. Pour cela, les deux disques sont séparés en deux couples de demi disques. Chaque demi disque 401 respectivement 402 est relié au demi disque 403 respectivement 404 prévu pour être situé en dessous par des pièces 406 , par exemple des entretoises, qui définissent l'espace entre les deux disques superposées ou décalés. Ensuite, on monte les deux couples de demi disques sur le carrousel. On gagne ainsi du temps de réglage des articles, puisque le réglage de l'espace entre les deux disques du carrousel peut être effectué en avance, tandis que l'installation est en fonctionnement avec une autre roue.

A l'entrée du carrousel, au-dessus d'un bord latéral du tapis roulant 2, se trouve une vis 8 d'entrée qui sert à amener les articles depuis le tapis roulant 2 jusqu'à un logement 5 du carrousel 3. La vis 8 est orientée horizontalement, sensiblement vers l'axe du carrousel, et donc obliquement par rapport à la direction de déplacement du tapis roulant 2.

Les articles successifs poussés par le tapis roulant 2 se logent chacun dans un creux de filet de la vis 8. Le pas de la vis 8 doit être adapté au diamètre des articles qui vont être contrôlés dans l'installation 1. La vis 8 amène chaque article à une vitesse contrôlée jusqu'à un logement 5 respectif de la roue 3 du carrousel.

L'article passe ensuite successivement par les différents postes de contrôle 7 en glissant sur le plancher fixe 61, puis entre en contact avec le tapis roulant 4 qui entraîne l'article hors de son logement 5 de la roue 3 du carrousel. Selon un mode de réalisation privilégié, la direction de déplacement des articles sortant de leurs logements respectifs du carrousel est alors radiale relativement à l'axe du carrousel. La sortie des article s'effectue donc « dans l'axe du carrousel », de façon naturelle. Ainsi, les articles qui sortent de la roue 3 du carrousel ne sont alors pas déséquilibrés lors de leur transfert de la roue 3 du carrousel au tapis roulant de sortie 4. La sortie est ainsi particulièrement stable.

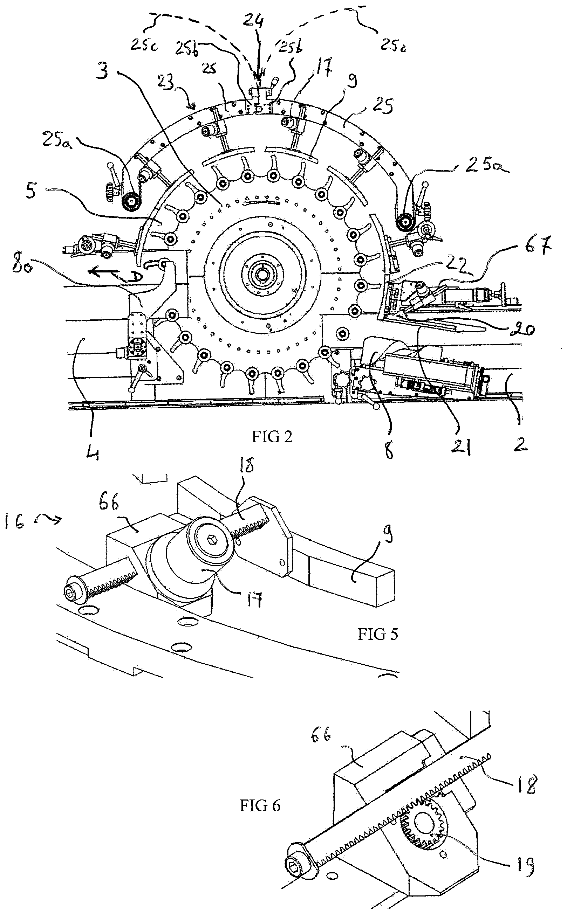

Comme le montre la figure 2, un guide curviligne 80 définit positivement la limite extérieure du virage que les articles doivent accomplir pour passer du carrousel au tapis roulant de sortie 4. Mais en pratique, un tel guide n'est pas absolument indispensable, les articles prenant facilement la direction de déplacement du tapis roulant de sortie 4 dès que leur fond entre en contact avec ledit tapis 4. Le tapis roulant de sortie 4 et le tapis roulant 2 ne se déplacent pas nécessairement à la même vitesse. Ainsi, la vitesse de sortie des article peut être supérieure à leur vitesse d'entrée dans un logement 5 du carrousel. Grâce à la sortie des articles « dans l'axe du carrousel », c'est-à-dire suivant une trajectoire D rectiligne qui est le prolongement d'un rayon du carrousel, ces derniers sont particulièrement stable lorsqu'ils quittent un logement du carrousel entraînés par le tapis de sortie 4, et l'on peut ainsi recourir à des vitesses de sortie des articles particulièrement élevées, par contrôle indépendant de la vitesse du tapis de sortie 4. Plus particulièrement, en optimisant la vitesse du tapis de sortie 4, on optimise la friction entre le fond de l'article arrivant au poste de sortie et le tapis de sortie 4, et on optimise ainsi l'accélération subie par l'article.

Le tapis de sortie 4 forme en outre un plan de triage des articles. Les articles contrôlés positivement (ne présentant pas de défaut) continuent leur trajet pour être stockés en attente de remplissage ou pour rejoindre directement une machine de remplissage. Les autres sont automatiquement séparés par une plaque d'aiguillage mobile non représentée, actionnée automatiquement. On peut également extraire du flux des articles un article défectueux que l'on a sciemment introduit à l'entrée pour vérifier le bon fonctionnement de l'installation de contrôle.

La vis 8 est entraînée en rotation par un servomoteur qui synchronise la rotation de la vis 8 avec la rotation de la roue 3 du carrousel. La roue 3 se décale d'un poste de contrôle 7, présentant alors le logement 5 vide suivant à l'entrée, lorsque la vis 8 a tourné d'un tour et amène un nouvel article à la roue 3 du carrousel.

La figure 3 montre un système de transmission 10 par courroie crantée qui entraîne l'arbre de rotation 11 de la vis 8. Ce type de transmission garantit la transmission des angles, en évitant les glissements, ce qui contribue à la bonne synchronisation entre le mouvement de la vis 8 et le mouvement de la roue 3 du carrousel.

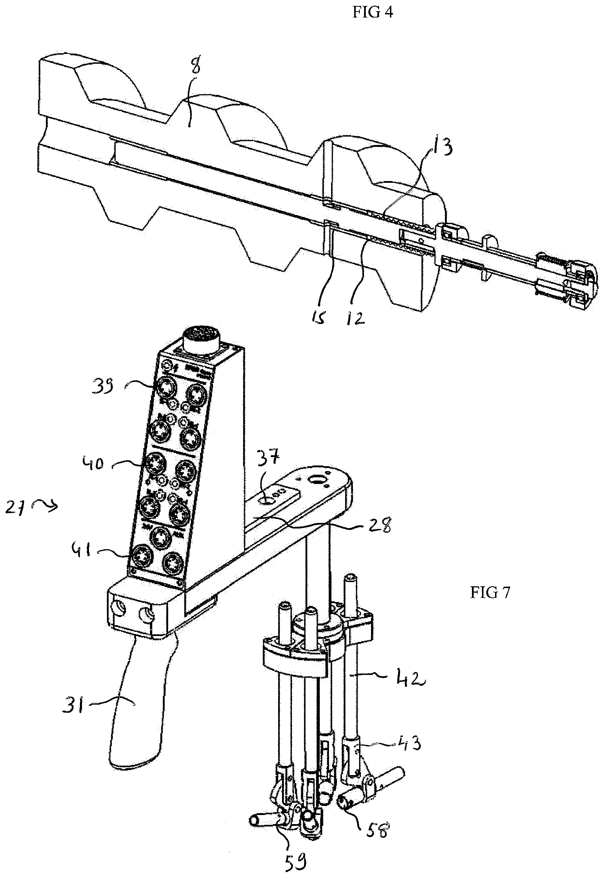

Dans un mode de réalisation privilégié, la vis 8 est fixée à l'arbre d'entraînement 11 par une fixation à baïonnette dont le détail est visible figure 4. Le principe consiste tout d'abord à faire coulisser la vis 8 sur l'arbre d'entraînement 11. Pendant ce mouvement, l'arbre pénètre dans un alésage axial de la vis 8. La vis 8 possède deux ergots diamétralement opposés faisant saillie radialement à l'intérieur de son alésage, qui coulissent dans deux gorges axiales 62 de l'arbre 11. Les deux ergots (non représentés pour alléger les figures) sont réalisés par des tiges métalliques insérées dans des logements radiaux 15 formés dans la vis 8. A leur extrémité atteinte par les ergots en fin de coulissement, les gorges 62 sont raccordées à une gâche 63 par une rainure en quart de cercle 64, ce qui donne à l'extrémité de la gorge une forme générale de crochet. A un certain stade, la vis 8 pousse une bague 12 montée coulissante sur l'arbre, qui comprime un ressort 13 monté autour de l'arbre d'entraînement 11 entre la bague 12 et un épaulement de l'arbre 11. On effectue ensuite un quart de tour avec la vis 8, toujours en comprimant le ressort 13, pour que les ergots circulent dans les rainures 64, puis on relâche la vis 8 pour que le ressort repousse axialement la vis 8 tandis que les ergots se logent dans les gâches 63. La vis est alors fixée par rapport à son arbre d'entraînement 11, sans possibilité de rotation ni de translation par rapport à celui-ci. Ce système de fixation à baïonnette permet le montage et le démontage rapide de la vis 8, de façon à pouvoir remplacer rapidement une vis 8 ayant un pas adapté à une première série d'articles, par une seconde vis 8 ayant un pas différent adapté à une seconde série d'articles.

Le long du trajet des articles sur le carrousel se trouvent des guides 9, qui s'étendent radialement à l'extérieur de la roue 3 pour maintenir les articles en place dans leurs logements 5 respectifs. Les faces actives des guides 9, tournées vers l'axe du carrousel, ont une forme d'arc de cercle, de rayon par exemple sensiblement égal au rayon d'un cercle passant par l'axe du carrousel et par une position moyenne des guides 9, et situé dans le plan de la roue 3 du carrousel. Les guides 9 sont disposés les uns à la suite des autres avec un certain espace libre entre eux. Des moyens 16 permettent de régler les guides 9 entre différentes positions correspondant à différents diamètres de l'article. Le réglage de la position des guides 9 permet non seulement d'adapter leur position au maintien d'articles de différents diamètres, mais aussi permet si besoin de retirer un article de son logement 5, rapidement et sans outillage spécifique. Les différentes positions correspondent respectivement à différentes distances entre les faces actives des guides 9, et l'axe du carrousel. Chaque guide est fixé du côté radialement extérieur, à une crémaillère 18 s'étendant radialement vers l'extérieur. Les moyens 16 pour régler la position des guides 9 comportent encore une molette de réglage 17 que l'on peut faire tourner à la main, par rapport à un bloc 66 rendu solidaire du bâti, entre différentes positions, de préférence définies par des crans. La molette 17 est solidaire d'un pignon 19 (figure 6) qui engrène avec la crémaillère 18, de sorte que la rotation de la crémaillère déplace le guide 9 de façon à régler la distance entre la face active et l'axe du carrousel. Dans un mode de réalisation privilégié, un système de verrouillage permet de maintenir en position la molette de réglage 17. Il faut dans ce cas commencer par désactiver le verrouillage de la rotation de la molette de réglage 17 avant de pouvoir effectuer un nouveau réglage de la position des guides 9. L'activation et la désactivation du verrouillage peuvent être réalisées simplement par une pression sur le dessus de la molette de réglage 17, ou encore en la tirant vers soi. Dans un mode de réalisation particulier, l'angle de rotation entre deux crans de la molette de réglage 17 correspond à 3 mm de déplacement de la crémaillère 18 et du guide 9.

Les guides 9 comprennent un guide 20 ayant la forme générale d'un dièdre. On le désignera par la suite par guide en dièdre 20. Il possède deux faces actives 21 et 22 formant un angle convexe. La face 21 guide l'article sur son trajet le long de la vis 8, sur le côté de l'article opposé à la vis 8, tandis que l'autre face 22 guide l'article au début de son trajet sur le carrousel. Le guide en dièdre 20 est réglable selon une direction oblique par rapport aux faces 21 et 22, de sorte que le réglage de sa position permet de régler simultanément l'espace laissé aux articles le long de la vis 8, et dans les logements 5. Le dispositif de réglage du guide 20 est analogue aux dispositifs de réglage 16 déjà décrits, excepté que sa crémaillère 67 n'est pas radiale, mais s'étend selon la direction oblique de réglage.

Les guides 9 sont portés par un support 23 (figure 2). Ce support 23 comporte des moyens de verrouillage rapide 24. Le support 23 est mobile entre une position d'ouverture dans laquelle les guides 9 libèrent les articles relativement aux logements 5, et une position de fermeture dans laquelle les articles sont maintenus dans leurs logements 5.

Les moyens 16 pour régler les guides agissent entre les guides 9 et le support 23. Plus particulièrement, les blocs 66 sont fixés au support 23. Quand les molettes de réglage 17 sont dans un état verrouillé, les crémaillères 18 , et avec elles les guides 9, sont solidaires des blocs 66, et donc du support 23. Le support 23 comporte deux battants 25 dont les extrémités opposées 25a sont fixes par rapport au bâti 6 de l'installation 1, et articulées par rapport à celui-ci. Les deux autres extrémités 25b sont adjacentes l'une à l'autre en position de fermeture et s'écartent l'une de l'autre vers l'extérieur de l'installation 1 lors du passage en position d'ouverture, par pivotement de chaque battant autour de son extrémité articulée 25a, comme illustré par des traits mixtes 25c représentant la trajectoire des extrémités 25b. Les moyens de verrouillage rapide 24 permettent de maintenir le support 23 en position de fermeture lorsque l'installation 1 est en fonctionnement. L'ouverture et la fermeture rapides du support 23 permettent de gagner du temps lorsqu'il est nécessaire d'atteindre l'intérieur du carrousel. Il peut par exemple arriver qu'un article soit brisé à l'intérieur de l'installation 1, et qu'il soit alors nécessaire d'enlever rapidement de l'installation 1 les débris de l'article.

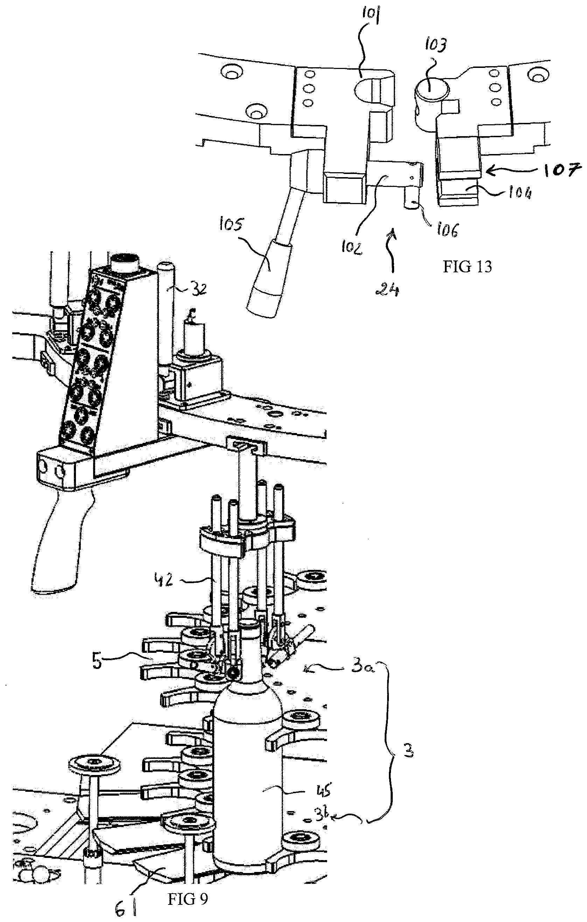

Les moyens de verrouillage rapide 24 comprennent sur une première extrémité de battant 25b, une pièce munie d'un creux en forme de V 101 dans laquelle s'encastre, lorsque l'on referme les deux battants 25, une pièce de forme complémentaire 103 située sur l'extrémité de battant 25b opposée. En outre, les moyens de verrouillage rapide 24 comprennent sur la première extrémité de battant 25b, une tige 102 qui, lorsque l'on referme les deux battants 25, vient s'encastrer dans une pièce en forme d'arc de cercle 104 située sur l'extrémité de battant 25b opposée. La pièce munie d'un creux en forme de V 101 et la pièce de forme complémentaire 103 permettent de positionner les deux battants 25 jusqu'à une position théorique de centrage. Les moyens de verrouillage rapide 24 comprennent en outre une poignée 105 située sur la première extrémité de battant 25b. En tournant la poignée 105, on ajuste précisément le serrage l'une contre l'autre des deux extrémités de battants 25b opposées, grâce à un ergot 106. L'ergot 106 est fixé à l'extrémité de la tige 102. L'axe principal de l'ergot 106 est perpendiculaire à l'axe principal de la tige 102. La tige 102 est reliée à la poignée 105, de sorte que lorsque l'on tourne la poignée 105, la tige 102 et l'ergot 106 tournent aussi. Lorsque l'on referme les deux battants 25, la poignée est en position haute, en butée, ce qui correspond à une position de l'ergot 106 telle que la tige 102 pénètre facilement dans la pièce en forme d'arc de cercle 104. La face 107 de cette pièce 104 située du côté opposé par rapport à la poignée 105, c'est-à-dire à droite sur la figure 13, est de forme hélicoïdale, avec une pente assez faible. Lorsque les deux battants 25 sont fermés, et éventuellement lorsque l'on tourne légèrement la poignée 105 vers le bas, cette face 107 hélicoïdale se trouve en contact avec l'ergot 106. Plus on baisse la poignée 105, plus on serre les extrémités de battants 25b opposées, car l'ergot 106 se déplace vers la partie plus épaisse de la pièce en forme d'arc de cercle 104. On réalise ainsi un verrouillage rigide et précis du support 23.

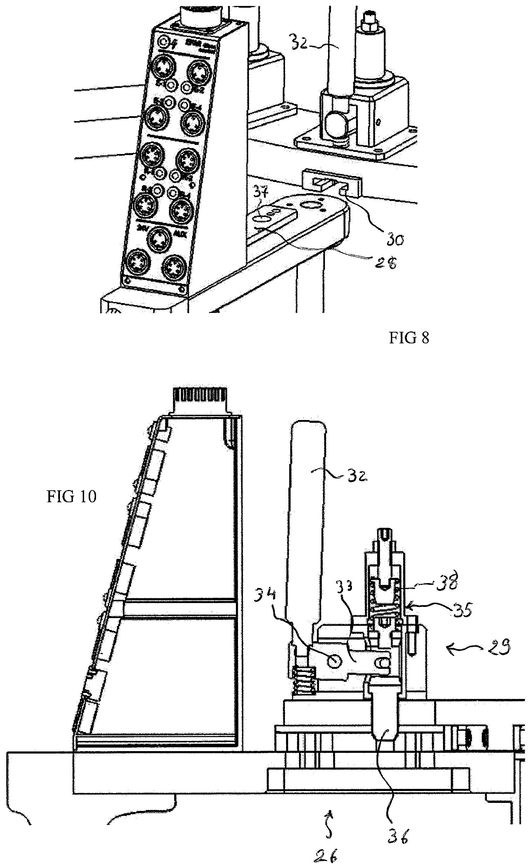

L'installation 1 comporte un ou plusieurs dispositifs 26 de montage, démontage et réglage rapide (voir figure 10) d'un module de contrôle 27 (voir figures 7 à 10). De tels dispositifs 26 permettent de pouvoir changer très rapidement un module de contrôle. Ainsi, lorsque l'on change la série des articles à contrôler, au lieu d'immobiliser l'installation 1 le temps d'effectuer de nouveaux réglages sur le module de contrôle 27, on remplace le premier module de contrôle 27 par un second module de contrôle 27 déjà réglé pour être adapté à la série d'articles à venir. Le module de contrôle 27 se trouve à l'emplacement d'un poste de contrôle 7. Le dispositif 26 de montage et démontage rapide se compose d'un système de glissière et de verrouillage rapide 29. Le système de glissière comprend un rail 30 lié au bâti 6 de l'installation 1, et s'étendant suivant une direction radiale relativement à l'axe du carrousel, et un coulisseau 28 solidaire du corps du module. On fait glisser le coulisseau 28 du module de contrôle 27 dans le rail 30, puis le verrouillage rapide 29 bloque le module de contrôle 27 en position relativement au bâti 6. Le système de verrouillage rapide 29 peut être déverrouillé manuellement lorsque l'on souhaite retirer le module de contrôle de l'installation 1. Le module de contrôle 27 comporte avantageusement une poignée 31 permettant sa préhension à la main lors du montage et du démontage rapide du module de contrôle 27.

La figure 10 montre le système de verrouillage rapide 29. Lorsque l'utilisateur ramène vers lui un manche 32 de déverrouillage et verrouillage porté par le bâti 6, le manche fait basculer un levier 33 autour d'un axe 34. Le levier entraîne alors la translation vers le haut d'un équipage mobile 35 comprenant en particulier un verrou 36 prévu pour pouvoir s'enfoncer dans un logement 37 sur le coulisseau 30 du module de contrôle 27. Ledit équipage mobile 35 est rappelé en position de verrouillage vers le bas par un ressort 38. Le basculement du manche 32 permet donc de soulever le verrou 36 pour permettre de positionner le module de contrôle 27, puis, lorsque l'on relâche le manche 32, et sous l'action du ressort 38, le verrou 36 s'enfonce dans le logement 37 et empêche ainsi que le module de contrôle 27 glisse le long du rail 28. Pour enlever le module de contrôle 27 de l'installation 1 par simple coulissement radialement vers l'extérieur, il suffit d'actionner à nouveau le manche 32 de façon à relever le verrou 36.

On peut prévoir sur l'installation 1 des emplacements pour des postes de contrôle 7 non occupés, mais déjà pourvus du dispositif 26 de montage et démontage rapide, de sorte que l'installation 1 puisse être facilement complétée. Ainsi, si un jour on souhaite effectuer un contrôle supplémentaire sur les articles, ou si une série d'articles en particulier nécessite au moins un contrôle supplémentaire, il sera simple et rapide de monter un module de contrôle 27 supplémentaire sur l'installation 1.

Dans un mode de réalisation privilégié, le coulisseau 30 ainsi que les éléments du verrouillage rapide 29 appartenant au module de contrôle 27 sont compatibles avec une seconde glissière et un second verrouillage rapide 29 appartenant cette fois à un banc de réglage. Ce banc de réglage est utilisé pour régler un module de contrôle 27 en dehors de l'installation 1.

Avantageusement, on utilisera le dispositif 26 de montage et de démontage rapide pour des contrôles qui nécessitent de longs réglages. En particulier, on pourra utiliser le dispositif 26 pour le contrôle consistant à détecter des fissurations sur les articles. La figure 7 montre un module de contrôle 27 pour détecter les fissurations, comportant des prises 39 pour alimenter électriquement des émetteurs de lumière, des prises 40 pour alimenter des récepteurs de lumière, ainsi que des prises 41 dites de réserve. Le module comporte aussi plusieurs tiges verticales 42 terminées chacune par un support 43. Les supports 43 peuvent recevoir chacun un émetteur ou un récepteur de lumière. On trouve un nombre pair de tiges 42, chaque paire portant sur ses deux supports 43 un émetteur 59 de lumière, pour une des deux tiges 42, et un récepteur 58 de lumière, pour l'autre tige 42. Les tiges sont réglables en hauteur et en rotation autour de leur axe par rapport au corps du module, de façon à permettre ainsi le réglage des émetteurs 59 et récepteurs 58 en hauteur et en orientation.

La technique permettant de détecter des fissurations sur un articles consiste à vérifier l'illumination de défauts typiques comme par exemple une fissure périphérique au col d'une bouteille. Lorsqu'on éclaire une fissuration présente sur un article tel qu'une bouteille en verre, et qu'on observe l'article sous un certain angle, on voit nettement la fissuration illuminée. Chaque paire de tiges 42 permet de détecter une fissuration typique différente. Pour chaque paire, l'émetteur 59 et le récepteur 58 sont positionnés de façon à ce que l'émetteur 59 illumine dans une direction telle que la fissuration qu'il doit détecter soit illuminée si elle est présente, et de façon à ce que le récepteur 58 reçoive l'intensité lumineuse renvoyée par la fissuration lorsqu'elle est illuminée par l'émetteur 59. Les différentes paires émetteur/récepteur sont utilisées avec des signaux lumineux de fréquences différentes, de façon à ce que les paires ne se perturbent pas entre elles. Le réglage de la position des différentes paires émetteur/récepteur se fait donc sur un banc de réglage annexe à l'installation 1, et en utilisant des articles échantillons présentant les différents défauts typiques que l'on veut pouvoir détecter.

L'installation 1 comprend aussi selon un mode de réalisation un poste de contrôle de la planéité 44 (voir figure 11), permettant de vérifier la planéité du bord libre de l'article 45. Le poste de contrôle de la planéité 44 comprend un embout tubulaire 46 mobile dont une extrémité de préférence plane 47 s'applique sur le bord libre du goulot de l'article 45. L'extrémité de préférence plane 47 est percée d'un trou permettant de laisser passer de l'air, placé sur l'extrémité de préférence plane 47 de telle sorte qu'il permette de relier une conduite d'air présente à l'intérieur de l'embout tubulaire 46 et l'intérieur de l'article 45. L'embout tubulaire 46 est relié par la conduite d'air à une source de vide 48, ainsi qu'à un capteur de pression 49. Lorsque l'article 45 arrive au niveau du poste de contrôle de planéité 44, l'embout tubulaire 46 est translaté vers le bas et verticalement jusqu'à ce que l'extrémité de préférence plane 47 se trouve en contact avec le bord libre de l'article 45. Ensuite, la source de vide 48 permet de faire diminuer la pression à l'intérieur de l'article 45, et le capteur de pression 49 permet de suivre l'évolution de la pression à l'intérieur de l'article 45. Dans un mode de réalisation privilégié, la source de vide agit en continu. En comparant les résultats expérimentaux à des valeurs théorique, on peut déterminer l'état de fermeture de l'article 45 lorsqu'une surface de préférence plane est appuyée contre son bord libre. Cela revient à déterminer la planéité du bord libre de l'article 45.

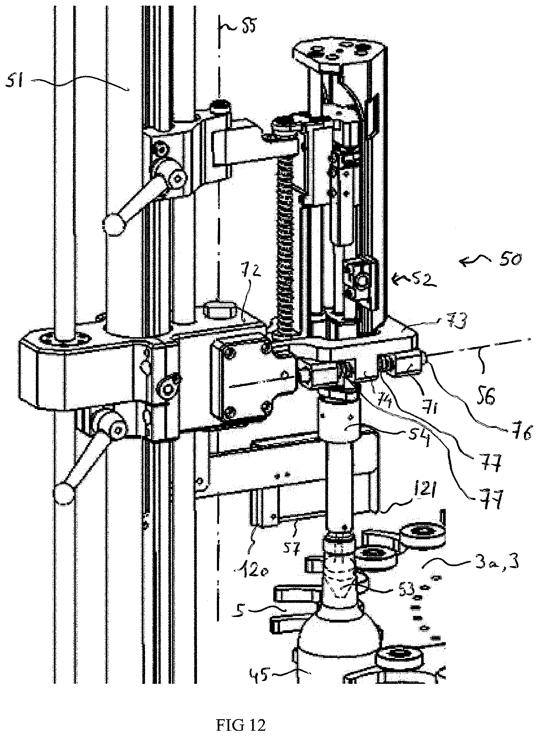

L'installation 1 comporte en outre un poste de contrôle de diamètre 50 dit poste de calibrage (voir figure 12) comprenant en particulier une colonne 51 fixée par rapport au bâti 6 de l'installation 1, un corps 52, des moyens mobiles qui viennent en prise avec le goulot de l'article 45, et des moyens d'autopositionnement.

Les moyens mobiles comprennent notamment un piston 53 tronconique qui vient se centrer dans le goulot. La partie conique du piston 53 permet de faciliter son insertion au moins partielle dans un article 45, tandis que son extrémité cylindrique est celle qui sert à contrôler le diamètre intérieur du goulot de l'article 45. Si le piston 53 s'engage entièrement dans le goulot de l'article 45, on considère que le diamètre intérieur de l'article 45 est supérieur ou égal au diamètre de la partie cylindrique du piston. Une cloche 54 vient coiffer le goulot après que le piston 53 se soit engagé à l'intérieur de l'article 45 afin de vérifier que le diamètre extérieur du goulot ne dépasse pas une certaine valeur.

Les moyens d'autopositionnement assurent au moins deux degrés de liberté entre le bâti 6 de l'installation 1 et le corps 52. Ces degrés de liberté permettent au corps 52, qui porte les moyens mobiles qui viennent en prise avec le goulot de l'article 45, de se positionner de façon adéquate par rapport à l'article 45 pendant que lesdits moyens mobiles viennent en prise avec le goulot de l'article 45.

Les moyens d'autopositionnement comprennent un axe de pivotement longitudinal 55, sensiblement parallèle à l'axe de l'article 45, situé entre la colonne 51 et l'axe du piston 53. Le corps 52 effectue par exemple une rotation de plus ou moins un angle théta, où théta est typiquement compris entre 10 et 15°. Les moyens d'autopositionnement comprennent en outre un axe de translation 56 transversal, perpendiculaire à l'axe de pivotement longitudinal 55.

Les moyens d'autopositionnement comprennent de préférence un châssis 71 monté pivotant dans un boîtier 72 autour de l'axe de pivotement 55. Le corps 52 du module portant les verrins d'actionnement du piston 53 et de la cloche 54, comprend une semelle 73 munie d'oreilles 74 qui coulissent sur des tiges 76 du châssis 71, parallèles à la direction de translation 56. Des ressorts 77 placés de part et d'autres des oreilles 74 rappellent la semelle 73 en position moyenne le long de la direction de translation 56. D'autres ressorts, non représentés, placés dans le boîtier 72 de part et d'autre du châssis 71, rappellent le châssis 71 en position angulaire moyenne autour de l'axe de pivotement 55. Ces derniers ressorts ainsi que les ressorts 77 constituent les moyens élastiques qui permettent de rappeler le corps 52 dans une position de repos autour de l'axe de pivotement 58 longitudinal et le long de la direction de coulissement 56, lorsque les moyens qui viennent en prise sont libres.

Ces deux degrés de liberté au moins entre le bâti 6 et le corps 52, permettent d'ajuster de façon très précise par rapport au goulot de l'article 45, la position du corps 52 portant les moyens mobiles qui viennent en prise avec le goulot.

On voit aussi à la figure 12 un faisceau laser 57. Ce faisceau laser est émis par un émetteur 120 vers un récepteur 121. Lorsqu'un article 45 se trouve entre l'émetteur 120 et le récepteur 121, le faisceau laser émis par l'émetteur est coupé et n'arrive plus jusqu'au récepteur 121, ce qui permet de détecter la présence d'un article 45, non seulement entre émetteur et récepteur, mais également en regard des postes de contrôles, compte tenu de l'intervalle fixe et bien connu entre les logements 5 successifs de la roue 3. Le signal du récepteur 121 peut être utilisé pour stopper la rotation de la roue 3 après chaque rotation élémentaire correspondant au pas entre deux logements 5. La rotation élémentaire suivante commence par exemple un certain temps prédéterminé après l'arrêt, ou lorsque tous les postes de contrôle sont revenus en position d'attente de la bouteille suivante.

## Revendications

1. Installation (1) de contrôle de la qualité d'une succession d'articles (45), en particulier des bouteilles, dans laquelle des éléments comprennent une vis (8) d'entraînement pour amener les articles (45) dans des logements (5) successifs d'une roue (3) de carrousel, des guides (9) pour maintenir les articles (45) dans les logements (5), au moins un module de contrôle (27) situé le long du trajet des articles (45), au moins un élément précité étant mis en place individuellement à l'aide d'au moins un dispositif (26) de montage et/ou de réglage rapide sans outillage spécifique, le dispositif (26) de montage et/ou de réglage rapide comprenant un dispositif de montage et démontage rapide du module de contrôle (27), le module de contrôle (27) étant configurable à l'extérieur de l'installation (1) de contrôle, **caractérisée en ce que** le dispositif (26) de montage et démontage rapide se compose d'un système de glissière et de verrouillage rapide (29), ledit système de glissière comprenant :
- un rail (30) lié au bâti de l'installation et s'étendant suivant une direction radiale relativement à l'axe du carrousel, et
- un coulisseau (28) solidaire du corps du module de contrôle (27).

2. Installation (1) de contrôle selon la revendication 1, **caractérisée en ce que** le module de contrôle (27) assure une détection des fissurations dans un article (45).

3. Installation (1) de contrôle selon la revendication 1 ou 2, **caractérisée en ce que** le système de glissière et de verrouillage est un système de glissière et de verrouillage amovible par lequel le module de contrôle (27) s'enclenche sur un appui lié au bâti (6) de l'installation (1) de contrôle.

4. Installation (1) de contrôle selon l'une des revendications 1 à 3, **caractérisée en ce que** le module de contrôle (27) comprend une poignée (31) permettant sa préhension à la main pour le montage et le démontage sur le bâti (6) de l'installation (1) de contrôle.

5. Installation (1) de contrôle selon l'une des revendications 1 à 4, **caractérisée en ce que** la roue (3) de carrousel est composée de deux disques.

6. Installation (1) de contrôle selon l'une des revendications 1 à 5, **caractérisée en ce que** l'au moins un dispositif de montage et/ou de réglage rapide comprend un système à baïonnette pour la fixation de la vis (8) sur un arbre (11) d'entraînement.

7. Installation (1) de contrôle selon la revendication 5, **caractérisée en ce que** le système à baïonnette assure le calage angulaire de la vis (8) sur l'arbre (11) d'entraînement.

8. Installation (1) de contrôle selon la revendication 6 ou 7, **caractérisée en ce que** l'arbre (11) d'entraînement est entraîné par un servomoteur.

9. Installation (1) de contrôle selon l'une des revendications 6 ou 8, **caractérisée en ce qu'**il y a au moins deux vis (8) interchangeables, correspondant à des articles (45) de diamètres différents.

10. Installation (1) de contrôle selon l'une des revendications 1 à 9, **caractérisée en ce que** l'au moins un dispositif de montage et/ou de réglage rapide comprend des moyens (16) pour régler les guides (9) entre différentes positions correspondant à différents diamètres des articles (45).

11. Installation (1) de contrôle selon la revendication 10, **caractérisée en ce que** l'un des guides (9) a une forme générale de dièdre, avec une face (21) guidant l'article (45) le long de la vis (8) d'entraînement, et une autre face (22) guidant l'article (45) au début de son trajet dans les logements (5) successifs.

12. Installation (1) de contrôle selon la revendication 11, **caractérisée en ce que** le guide en dièdre (20) est réglable selon une direction oblique par rapport à chacune des deux faces, pour assurer un réglage simultané et concordant de l'espace laissé aux articles (45) le long de la vis (8) et dans les logements (5), en fonction du diamètre des articles (45).

13. Installation (1) de contrôle selon l'une des revendications 1 à 12, **caractérisée en ce que** les guides (9) sont portés par au moins un support (23), mobile entre une position d'ouverture dans laquelle les guides (9) libèrent les articles (45) relativement aux logements (5), et une position de fermeture définie par des moyens de verrouillage rapide (24) et dans laquelle les articles (45) sont maintenus dans leurs logements (5).

14. Installation (1) de contrôle selon la revendication 13, **caractérisée en ce que** les moyens de verrouillage rapide (24) comprennent une pièce munie d'un creux en forme de V (101) et une tige (102) terminée par un ergot (106), situés sur un premier battant (25), et s'encastrant lors de la fermeture du support (23) respectivement dans une pièce de forme complémentaire (103) et une pièce en forme d'arc de cercle (104), la pièce en forme d'arc de cercle comprenant une face (107) qui est en contact avec l'ergot (106) après fermeture du support (23), et qui est de forme hélicoïdale.

## Patentansprüche

1. Qualitätskontrollanlage (1) für eine Abfolge von Artikeln (45), insbesondere Flaschen, wobei Elemente eine Förderschnecke (8) zum Mitnehmen der Artikel (45) in aufeinanderfolgende Aufnahmeausnehmungen (5) eines Karussellrads (3), Führungen (9) zum Halten der Artikel (45) in den Aufnahmeausnehmungen (5) und zumindest ein Kontrollmodul (27) umfassen, das entlang der Wegstrecke der Artikel (45) liegt, wobei zumindest ein vorgenanntes Element mittels zumindest einer Schnellmontage- und/oder -einstellvorrichtung (26) ohne spezifisches Werkzeug einzeln eingesetzt ist, wobei die Schnellmontage- und/oder -einstellvorrichtung (26) eine Schnellmontage- und -demontagevorrichtung für das Kontrollmodul (27) enthält, wobei das Kontrollmodul (27) außerhalb der Kontrollanlage (1) konfigurierbar ist,
**dadurch gekennzeichnet, dass**
die Schnellmontage- und -demontagevorrichtung (26) aus einem Schnellgleitführungs- und -verriegelungssystem (29) besteht, wobei das Gleitführungssystem enthält:
- eine Schiene (30), die mit dem Gestell der Anlage verbunden ist und sich in einer radialen Richtung bezüglich der Achse des Karussells erstreckt, und
- einen Gleitstein (28), der fest mit dem Korpus des Kontrollmoduls (27) verbunden ist.

2. Kontrollanlage (1) nach Anspruch 1, **dadurch gekennzeichnet, dass** das Kontrollmodul (27) eine Detektion von Rissbildungen in einem Artikel (45) sicherstellt.

3. Kontrollanlage (1) nach Anspruch 1 oder 2, **dadurch gekennzeichnet, dass** das Gleitführungs- und Verriegelungssystem ein abnehmbares Gleitführungs- und Verriegelungssystem ist, mit dem das Kontrollmodul (27) an einer Abstützung einrastet, die mit dem Gestell (6) der Kontrollanlage (1) verbunden ist.

4. Kontrollanlage (1) nach einem der Ansprüche 1 bis 3, **dadurch gekennzeichnet, dass** das Kontrollmodul (27) einen Griff (31) enthält, der dessen Ergreifen mit der Hand zum Montieren und Abmontieren am Gestell (6) der Kontrollanlage (1) gestattet.

5. Kontrollanlage (1) nach einem der Ansprüche 1 bis 4, **dadurch gekennzeichnet, dass** das Karussellrad (3) aus zwei Scheiben besteht.

6. Kontrollanlage (1) nach einem der Ansprüche 1 bis 5, **dadurch gekennzeichnet, dass** die zumindest eine Schnellmontage- und/oder -einstellvorrichtung ein Bajonettverschlusssystem zum Befestigen der Schnecke (8) an einer Antriebswelle (11) enthält.

7. Kontrollanlage (1) nach Anspruch 5, **dadurch gekennzeichnet, dass** das Bajonettverschlusssystem die Winkelverkeilung der Schnecke (8) an der Antriebswelle (11) sicherstellt.

8. Kontrollanlage (1) nach Anspruch 6 oder 7, **dadurch gekennzeichnet, dass** die Antriebswelle (11) über einen Servomotor angetrieben wird.

9. Kontrollanlage (1) nach einem der Ansprüche 6 oder 8, **dadurch gekennzeichnet, dass** zumindest zwei auswechselbare Schnecken (8) vorhanden sind, die Artikeln (45) mit unterschiedlichen Durchmessern entsprechen.

10. Kontrollanlage (1) nach einem der Ansprüche 1 bis 9, **dadurch gekennzeichnet, dass** die zumindest eine Schnellmontage- und/oder -einstellvorrichtung Einrichtungen (16) zum Einstellen der Führungen (9) zwischen verschiedenen Positionen enthält, die unterschiedlichen Durchmessern der Artikel (45) entsprechen.

11. Kontrollanlage (1) nach Anspruch 10, **dadurch gekennzeichnet, dass** eine der Führungen (9) eine Diederform mit einer Seite (21) hat, die den Artikel (45) entlang der Förderschnecke (8) führt, sowie mit einer weiteren Seite (22), die den Artikel (45) zu Beginn seiner Wegstrecke in die aufeinanderfolgenden Aufnahmeausnehmungen (5) führt.

12. Kontrollanlage (1) nach Anspruch 11, **dadurch gekennzeichnet, dass** die diederförmige Führung (20) entlang einer zu jeder ihrer beiden Seiten schräg verlaufenden Richtung einstellbar ist, um eine gleichzeitige und übereinstimmende Einstellung des den Artikeln (45) gelassenen Freiraums entlang der Schnecke (8) und in den Aufnahmeausnehmungen (5) in Abhängigkeit von dem Durchmesser der Artikel (45) sicherzustellen.

13. Kontrollanlage (1) nach einem der Ansprüche 1 bis 12, **dadurch gekennzeichnet, dass** die Führungen (9) von zumindest einem Träger (23) getragen werden, der zwischen einer Öffnungsstellung, in welcher die Führungen (9) die Artikel (45) bezüglich der Aufnahmeausnehmungen (5) freigeben, und einer Schließstellung verstellbar ist, die von Schnellverriegelungseinrichtungen (24) definiert wird und in welcher die Artikel (45) in ihren Aufnahmeausnehmungen (5) gehalten werden.

14. Kontrollanlage (1) nach Anspruch 13, **dadurch gekennzeichnet, dass** die Schnellverriegelungseinrichtungen (24) ein mit einem V-förmigen Hohlraum (101) versehenes Teil und einen mit einer Nase (106) endenden Stift (102) enthalten, welche sich an einem ersten Schenkel (25) befinden und beim Schließen des Trägers (23) in ein in seiner Form komplementäres Teil (103) bzw. in ein kreisbogenförmiges Teil (104) eingreifen, wobei das kreisbogenförmige Teil eine Seite (107) aufweist, die nach dem Schließen des Trägers (23) die Nase (106) kontaktiert und wendelförmig ausgebildet ist.

## Claims

1. Installation (1) for quality control of a succession of articles (45), in particular bottles, in which elements comprise a drive worm (8) for conveying the articles (45) to successive housings (5) of a carousel wheel (3), guides (9) for holding the articles (45) in the housings (5), at least one control module (27) situated along the path of the articles (45), at least one aforesaid element being put in place individually using at least one device (26) for rapid mounting and/or adjustment without specific tooling, the rapid mounting and/or adjustment device (26) comprising a device for rapid mounting and removal of the control module (27), it being possible to configure the control module (27) outside the control installation (1),
**characterized in that** the rapid mounting and removal device (26) is composed of a quick-lock slider system (29), said slider system comprising:
- a track (30) attached to the frame of the installation and extending in a radial direction relative to the axis of the carousel, and
- a traveller (28) firmly fixed to the body of the control module (27).

2. Control installation (1) according to claim 1, **characterized in that** the control module (27) ensures detection of the crack formation in an article (45).

3. Control installation (1) according to claim 1 or 2, **characterized in that** the locking slider system is a removable locking slider system by which the control module (27) is latched onto a support attached to the frame (6) of the control installation (1).

4. Control installation (1) according to one of claims 1 to 3, **characterized in that** the control module (27) comprises a handle (31) allowing it to be gripped in the hand for mounting on, and removal from, the frame (6) of the control installation (1).

5. Control installation (1) according to one of claims 1 to 4, **characterized in that** the carousel wheel (3) is composed of two disks.

6. Control installation (1) according to one of claims 1 to 5, **characterized in that** the at least one rapid mounting and/or adjustment device comprises a bayonet system for fastening the worm (8) on a drive shaft (11).

7. Control installation (1) according to claim 5, **characterized in that** the bayonet system ensures the angular setting of the worm (8) on the drive shaft (11).

8. Control installation (1) according to claim 6 or 7, **characterized in that** the drive shaft (11) is servo-motor driven.

9. Control installation (1) according to one of claims 6 or 8, **characterized in that** there are at least two interchangeable worms (8), corresponding to articles (45) of different diameters.

10. Control installation (1) according to one of claims 1 to 9, **characterized in that** the at least one rapid mounting and/or adjustment device comprises means (16) for adjusting the guides (9) between different positions corresponding to different diameters of the articles (45).

11. Control installation (1) according to claim 10, **characterized in that** one of the guides (9) has a generally dihedral shape, with a face (21) guiding the article (45) along the drive worm (8), and another face (22) guiding the article (45) at the start of its path into the successive housings (5).

12. Control installation (1) according to claim 11, **characterized in that** the dihedral guide (20) is adjustable in an oblique direction with respect to each of the two faces, in order to ensure simultaneous, consistent adjustment of the space allowed to the articles (45) along the worm (8) and in the housings (5), depending on the diameter of the articles (45).

13. Control installation (1) according to one of claims 1 to 12, **characterized in that** the guides (9) are borne by at least one support (23) that is mobile between an open position in which the guides (9) release the articles (45) relative to the housings (5), and a closed position defined by quick-lock means (24) and in which the articles (45) are held in their housings (5).

14. Control installation (1) according to claim 13, **characterized in that** the quick-lock means (24) comprise a part equipped with a V-shaped recess V (101) and a rod (102) terminated by a pin (106), situated on a first leaf (25), and during the closure of the support (23) respectively fitting into a part having a complementary shape (103) and a part in the shape of an arc of a circle (104), the part in the shape of an arc of a circle comprising a face (107) which is in contact with the pin (106) after closure of the support (23), and which has a helical shape.
